# EUROPÄISCHE PATENTSCHRIFT

(11) **EP 4 018 092 B1**
(45) Veröffentlichungstag und Bekanntmachung des Hinweises auf die Patenterteilung: **11.10.2023**
(21) Anmeldenummer: 20761186.4
(22) Anmeldetag: 20.08.2020
(51) Int. Cl.: F03D 13/30, F03D 80/30

(54) **VERFAHREN ZUM ÜBERPRÜFEN EINES BLITZSCHUTZSYSTEMS IN EINEM WINDENERGIEANLAGEN-ROTORBLATT**
METHOD FOR TESTING A LIGHTNING PROTECTION SYSTEM IN A WIND TURBINE ROTOR BLADE
PROCÉDÉ DE TEST D'UN SYSTÈME DE PROTECTION CONTRE LA FOUDRE DANS UNE PALE DE ROTOR D'ÉOLIENNE

(30) Priorität: 22.08.2019 DE 102019122583
(43) Veröffentlichungstag der Anmeldung: 29.06.2022
(73) Patentinhaber: Wobben Properties GmbH, 26607 Aurich (DE)
(72) Erfinder: JANSEN, Gerhard, 49757 Vrees (DE)
(74) Vertreter: Eisenführ Speiser
(86) Internationale Anmeldenummer: PCT/EP2020/073353
(87) Internationale Veröffentlichungsnummer: WO 2021/032846

(56) Entgegenhaltungen:
- EP-A1- 3 693 601
- JP-A- 2013 029 351
- US-A1- 2011 142 643
- US-A1- 2013 336 786

## Beschreibung

Die vorliegende Erfindung betrifft ein Verfahren zum Testen bzw. Überprüfen eines Blitzschutzsystems in einem Windenergieanlagen-Rotorblatt.

Aufgrund der Höhe der Windenergieanlagen sowie der Längen der Rotorblätter der Windenergieanlagen muss jede Windenergieanlage ein effektives Blitzschutzsystem aufweisen, da ansonsten ein Blitzeinschlag die Windenergieanlage beschädigen könnte.

Die Funktionsweise des Blitzableitsystems muss überprüft werden können. Dies erfolgt typischerweise von außen, wobei ein Kontakt zu dem Blitzableitsystem im Bereich der Rotorblattspitze herzustellen ist. Hierzu ist eine Höhenarbeit beispielsweise in Form eines Abseilers, einer Bühne, einem Steiger oder alternativ Drohnentechnik vonnöten. Der Bundesverband Windenergie BWE hat hierzu eine Arbeitsrichtlinie zur Blitzschutzsystemprüfung erlassen. Hierbei müssen beispielsweise die Fangeinrichtungen (Rezeptoren) und die Ableitstrecke im Rotorblatt überprüft werden. Dies erfolgt beispielsweise mittels einer Messung des Durchgangswiderstandes an den Fangeinrichtungen (Rezeptoren) bis beispielsweise zur Erdanschlussfahne im Turmfuß. Dies setzt voraus, dass die Fangeinrichtungen kontaktiert worden sind. Hierzu muss eine Höhenarbeit erfolgen.

Bei derartigen Messungen kann es dazu kommen, dass die Messungen nicht erfolgreich sind. Daher kann es dazu kommen, dass die Funktionsweise des Blitzableitsystems auf andere Art und Weise überprüft werden muss.

In der prioritätsbegründenden deutschen Patentanmeldung hat das Deutsche Patent- und Markenamt die folgenden Dokumente zitiert: DE 10 2005 017 865 A, DE 10 2017 120 407 A1 und US 2013/0336786 A1.

US 2011/0142643 A1 zeigt eine Windenergieanlage sowie einen Blitzschutz für eine Windenergieanlage. Insbesondere ist ein Verfahren zum Testen des Blitzableitsystems des Windenergieanlagen-Rotorblattes gezeigt.

JP 2013 29351 A zeigt ein Verfahren zum Testen eines Blitzschutzsystems eines Windenergieanlagen-Rotorblattes.

US 2013/0336786 A1 zeigt ein Verfahren zum Testen eines Blitzschutzsystems einer Windenergieanlage.

EP 3 693 601 A1 zeigt eine Blitzschutzvorrichtung für ein Rotorblatt einer Windenergieanlage.

Es ist eine Aufgabe der vorliegenden Erfindung ein Verfahren zum Testen eines Blitzableitsystems in einem Windenergieanlagen-Rotorblatt zu verbessern. Insbesondere ist es Aufgabe der vorliegenden Erfindung ein entsprechendes Verfahren zum Testen eines Blitzableitsystems vorzusehen, welches eine einfache und sichere Möglichkeit des Testens des Blitzableitsystems ermöglicht.

Diese Aufgabe wird durch ein Verfahren zum Testen eines Blitzableitsystems in einem Windenergieanlagen-Rotorblatt gemäß Anspruch 1 gelöst.

Somit wird ein Verfahren zum Testen eines Blitzableitsystems in einem Windenergieanlagen-Rotorblatt vorgesehen. Das Blitzableitsystem wird im Bereich der Rotorblattwurzel kontaktiert. Eine Messleitung mit einer leitfähigen Spitze wird in das Innere des Rotorblattes eingeführt, bis die leitfähige Spitze im elektrischen Kontakt steht mit einem Element des Blitzableitsystems. Ein Signal wird über die Messleitung eingespeist und das an dem Blitzableitsystem im Bereich der Rotorblattwurzel ankommende Signal wird gemessen, um die Funktionsweise des Blitzableitsystems im Rotorblatt zu überprüfen. Danach wird die Messleitung wieder entfernt.

Gemäß einem Aspekt der vorliegenden Erfindung weist das Rotorblatt mindestens einen Blitzrezeptor im Bereich der Rotorblattspitze und ein Blitzschutzkabel oder einen Blitzschutzleiter im Inneren des Rotorblattes auf. Ein elektrischer Kontakt wird zwischen der elektrisch leitfähigen Spitze der Messleitung und dem mindestens einen Blitzrezeptor hergestellt.

Dazu kann eine Messeinheit z. B. mit einem Ableitring an der Rotorblattwurzel als Teil des Blitzableitsystems elektrisch verbunden werden. Die Messeinheit wird ferner mit einer Messleitung und einer leitfähigen Spitze (z. B. in Form einer leitenden Bürste) verbunden. Optional kann ein Gewicht an der leitenden Bürste angebracht werden. Die leitende Bürste kann dann mittels der Messleitung in das Innere des Rotorblatts eingeführt werden. Dazu kann das Rotorblatt beispielsweise sich in einer 6-Uhr-Position befinden, so dass die Messleitung mit der leitenden Bürste aufgrund der Schwerkraft nach unten geführt werden kann bis sie einen elektrischen Kontakt mit dem Blitzableitsystem (z. B. im Bereich der Rotorblattspitze) herstellt. Anschließend kann die Messeinheit beispielsweise mit einem Impulsgenerator eine Durchgangsmessung des Blitzableitsystems durchführen. Alternativ dazu kann eine Widerstandsmessung wie in der Richtlinie des Bundesverbandes Windenergie BWE spezifiziert, durchgeführt werden. Ferner können alternative Verfahren durchgeführt werden. Hierzu kann beispielsweise ein Impuls durch den Impulsgenerator erzeugt werden und durch das Blitzableitsystem (z. B. von der Rotorblattspitze bis z. B. zum Ableitring) im Bereich der Rotorblattwurzel übertragen werden. Die Messeinheit kann dann den Durchgangswiderstand erfassen und damit bestimmen, ob das Blitzableitsystem defekt ist oder nicht. Alternativ dazu kann ein geeignetes Signal erzeugt werden, welches eine Beurteilung des Zustandes der Ableitstrecke ermöglicht.

Gemäß einem Aspekt der vorliegenden Erfindung ist die Messleitung als ein Kabel mit einem Schornsteinfegerbesen, Kaminbesen oder Schornsteinbesen sowie optional ein Gewicht ausgestaltet.

Die Erfindung betrifft somit die Verwendung eines Schornsteinbesens mit einem elektrischen Kabel zum Testen der Funktionsweise eines Blitzableitsystems in einem Windenergieanlagen-Rotorblatt. Der Schornsteinbesen mit dem elektrischen Kabel dient damit als eine Messleitung, um z. B. einen Durchgangswiderstand des Blitzableitsystems bestimmen zu können oder um ein geeignetes Signal zu übertragen.

Gemäß einem Aspekt der vorliegenden Erfindung erfolgt eine Positionierung der Messleitung und der Messspitze durch eine verfahrbare Positioniereinheit innerhalb oder außen an dem Rotorblatt.

Optional kann die verfahrbare Positioniereinheit eine Halteeinheit zum Halten der Positioniereinheit in oder an dem Rotorblatt aufweisen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß einem Ausführungsbeispiel der Erfindung,
- Fig. 2 und 3: zeigen jeweils eine schematische Schnittansicht eines Abschnitts eines Windenergieanlagen-Rotorblattes,
- Fig. 4: zeigt eine schematische Darstellung einer leitenden Bürste als Teil des erfindungsgemäßen Messsystems, und
- Fig. 5: zeigt eine schematische Darstellung eines Abschnitts der Messeinheit gemäß der Erfindung.

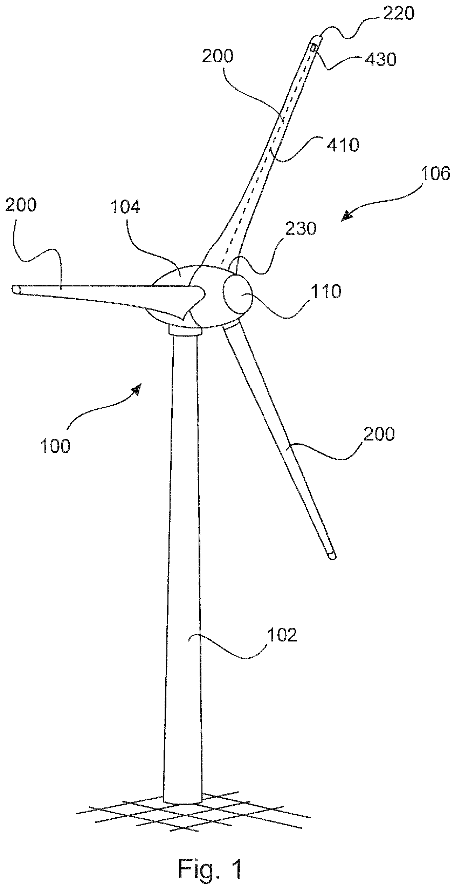

Fig. 1 zeigt eine schematische Darstellung einer Windenergieanlage gemäß einem Ausführungsbeispiel der Erfindung. Die Windenergieanlage 100 weist einen Turm 102, eine Gondel 104, einen Spinner 110 sowie drei Rotorblätter 200 auf, welche mit dem Spinner bzw. aerodynamischen Rotor 106 gekoppelt sind. Im Inneren der Gondel ist ein (nicht gezeigter) Generator vorgesehen, dessen Rotor mit dem aerodynamischen Rotor gekoppelt ist, so dass durch Bewegung des aerodynamischen Rotors 106 es zu einer Erzeugung von elektrischer Leistung kommt.

Die Rotorblätter 200 weisen jeweils eine Rotorblattwurzel 210 und eine Rotorblattspitze 220 auf. Ferner kann im Inneren des Rotorblattes 200 im Bereich der Rotorblattspitze 220 ein Blitzrezeptor 430 und im Bereich der Rotorblattwurzel ein Ableitring 240 vorgesehen sein. Ein Blitzschutzkabel 410 verbindet die Blitzrezeptoren 430 und den Ableitring 240.

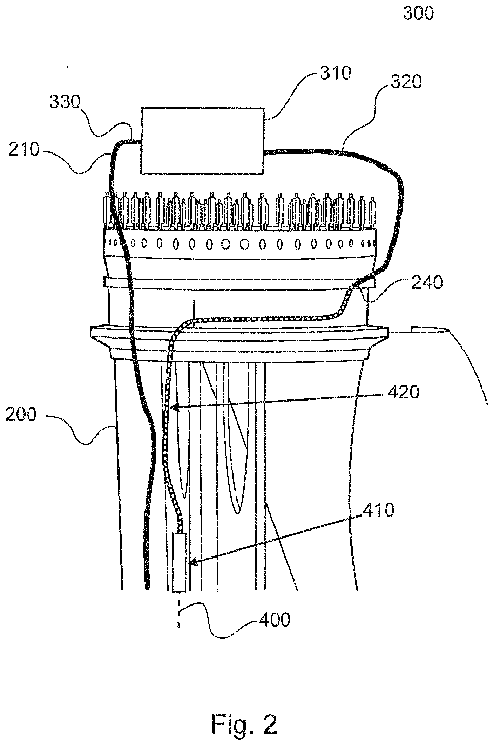

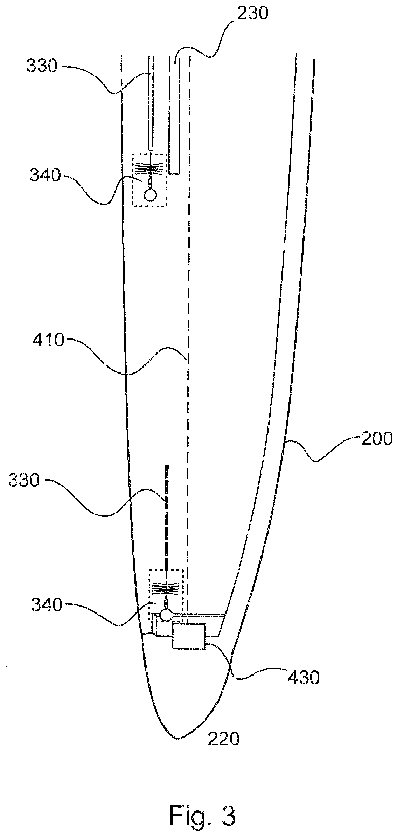

Fig. 2 und 3 zeigen jeweils eine schematische Schnittansicht eines Abschnitts eines Windenergieanlagen-Rotorblattes. In Fig. 2 ist insbesondere der Bereich der Rotorblattwurzel 210 dargestellt. Im Bereich der Rotorblattwurzel 210 ist ein Ableitring 240 des Blitzschutzsystems vorgesehen. Der Ableitring 240 ist über eine Kabelverbindung 420 mit einem Blitzschutzkabel 410 gekoppelt, welcher sich entlang der Längsrichtung des Rotorblattes 200.

Alternativ dazu können Aluminiumprofile als Ableitstrecke verwendet werden. Diese können aufgrund der Länge der Rotorblätter Verschraubungen aufweisen, die als Verbindung von Stegsegment zu Stegsegment dienen können.

Ferner können Aluminium-Profile mit Kabelbäumen kombiniert werden. Auch hier können freiliegende Verschraubungen als Verbindungselemente vorgesehen sein und an mindestens einen Blitzschutzrezeptor 430 im Bereich der Rotorblattspitze gekoppelt sein.

Erfindungsgemäß wird eine Messeinheit 310 vorgesehen, welche zum einen über eine Messleitung 320 mit dem Ableitring 240 gekoppelt ist. Eine weitere Messleitung 330 weist an ihrem freien Ende eine elektrisch leitfähige Spitze, z.B. eine Bürste, beispielsweise in Form eines Schornsteinfegerbesens auf. Die Bürste 340 wird mittels der Messleitung 330 in das Innere des Rotorblattes 200 eingeführt. Hierzu kann das Rotorblatt 200 beispielsweise sich in einer 6-Uhr-Postion befinden, so dass die Messleitung 330 mit der Bürste 340 durch die Schwerkraft nach unten gezogen wird. Optional kann ein Gewicht 343 im Bereich der Bürste 342 vorgesehen sein, um die Bürste 342 mit der Messleitung 330 nach unten zu ziehen.

Erfindungsgemäß ist die Messleitung 330 somit als ein elektrisch leitfähiges Kabel ausgestaltet und weist an seinem freien Ende einen Schornsteinfegerbesen 342 mit einem Gewicht 343 auf.

Die leitende Spitze der Messleitung 330 kann als Bürste ausgestaltet sein. Wichtig dabei ist, dass die Spitze/Bürste elektrisch leitend ist und leitend mit der Messleitung 330 gekoppelt ist. Die Messleitung 330 mit der leitenden Büste 340 wird solange in das Innere des Rotorblatts 200 eingeführt bis die elektrisch leitfähige Bürste 340 im elektrischen Kontakt mit beispielsweise einem der Blitzrezeptoren 430 im Bereich der Rotorblattspitze 220 kommt. Die Rezeptoren und die Verbindungsstellen können im gesamten Rotorblatt verteilt sein. Anschließend kann die Messeinheit 310, welche beispielsweise einen Impulsgenerator aufweist, einen Impuls oder Messsignal durch die Messleitung 330 abgeben, welcher dann aufgrund der elektrischen Koppelung ebenfalls durch das Blitzableitsystem 400 verläuft und über die weitere Messleitung 320 zurück zur Messeinheit 300 führt.

Mit dem erfindungsgemäßen Messverfahren ist somit eine Prüfung des Blitzableitsystems innerhalb des Rotorblattes möglich. Damit kann auf eine Höhenarbeit verzichtet werden, die ansonsten bei einer Überprüfung des Blitzableitsystems außen an dem Rotorblatt benötigt worden wäre. Ferner kann mit dem erfindungsgemäßen System auch eine Überprüfung eines Blitzableitsystems an denjenigen Stellen erfolgen, welche schwer zugänglich sind bzw. welche nur unter hohem Kostenaufwand betreten werden können. Die kann beispielsweise eine Ableitstrecke im Spinner sowie die Funkenstrecke bis zum Fundament darstellen. Ferner kann mit dem erfindungsgemäßen Verfahren eine einfache Überprüfung von einem Abschnitt des Blitzschutzsystems erfolgen, bei welchem viele Übergangsstellen (Schraubverbindung, Funkenstrecken, Verbindungselemente) vorgesehen sind.

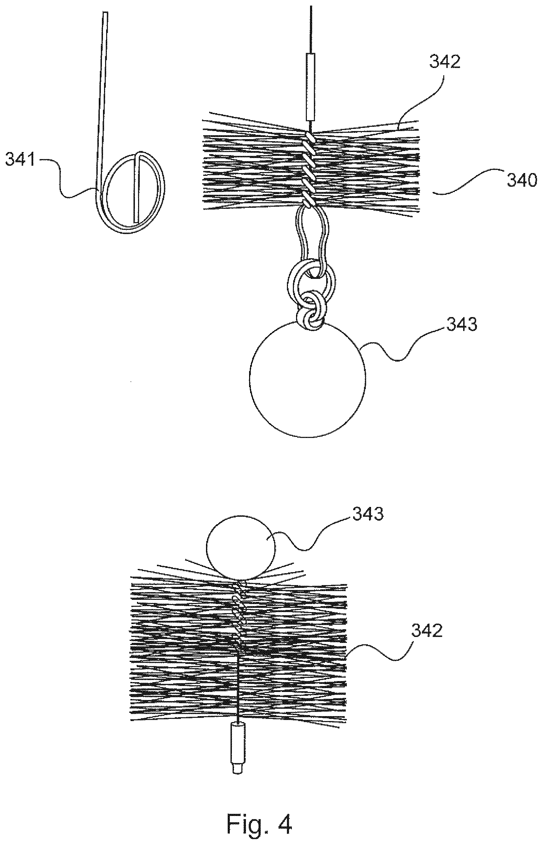

Fig. 4 zeigt eine schematische Darstellung einer leitenden Bürste als Teil des erfindungsgemäßen Messsystems.

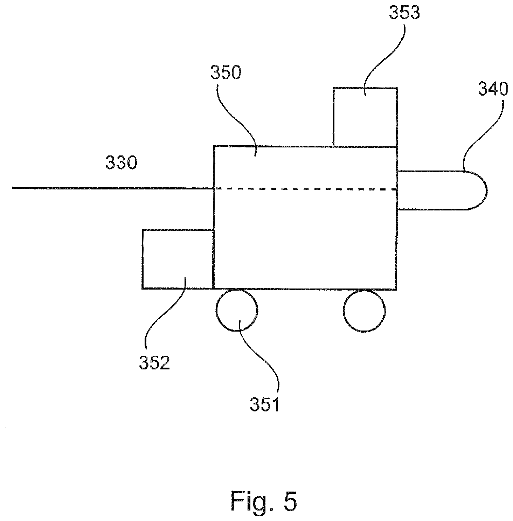

Fig. 5 zeigt eine schematische Darstellung eines Abschnitts der Messeinheit gemäß der Erfindung. Die Messeinheit gemäß Fig. 5 weist eine elektrisch leitfähige Spitze 340, eine Messleitung 330 sowie eine fahrbare Positioniereinheit 350 auf, mittels welcher die Spitze 340 außen am Rotorblatt oder innerhalb des Rotorblattes verfahrbar und/oder positionierbar ist.

Die elektrisch leitfähige Spitze kann die Form der Bürste 340 gemäß den Fig. 2 und 3 aufweisen. Die verfahrbare Positioniereinheit 350 kann beispielsweise Räder 351 oder dergleichen aufweisen, mittels welcher die verfahrbare Einheit 350 sich entlang des Rotorblattes bewegen kann.

Die verfahrbare Positioniereinheit 350 kann fernsteuerbar ausgestaltet sein.

Optional kann die verfahrbare Positioniereinheit 350 eine Halteeinheit 352 aufweisen, welche verhindert, dass die verfahrbare Positioniereinheit 350 mit der Spitze 340 von der Oberfläche des Rotorblattes herunterfällt. Die Halteeinheit 352 kann beispielsweise eine Unterdruckeinheit darstellen, mittels welcher die verfahrbare Positioniereinheit 350 an die Oberfläche des Rotorblattes angepresst oder angesaugt wird. Alternativ dazu kann die Halteeinheit 352 mindestens einen Magneten aufweisen, mittels welchem die Halteeinheit 352 am metallischen Element des Blattes gehalten werden kann. Ferner kann die Halteeinheit 352 eine Neigungserkennung aufweisen. Alternativ oder zusätzlich dazu kann eine Begrenzungserkennung vorgesehen werden, welche verhindert, dass die Positioniereinheit herunterfällt oder gegen Wände fährt.

Optional kann die verfahrbare Positioniereinheit 350 eine Kamera 353 aufweisen, mittels welcher die Bewegung der Spitze 340 überprüft werden kann, um sicherzustellen, dass die Messspitze 340 im elektrischen Kontakt mit dem gewünschten Abschnitt des Blitzschutzsystems gebracht wird.

Die Positioniereinheit 350 kann insbesondere eingesetzt werden, wenn sich das Rotorblatt 200 in einer 3-Uhr oder 9-Uhr-Position (d. h. im Wesentlichen waagerecht) befindet. Alternativ dazu kann die Positioniereinheit eingesetzt werden, wenn das Rotorblatt sich z. B. in einer senkrechten Position befindet.

Gemäß einem Aspekt der Erfindung wird nach Abschluss der Überprüfung des Blitzableitsystems die Messleitung wieder entfernt. Sie wird somit nur temporär verwendet und ist damit nicht fest eingebaut.

## Patentansprüche

1. Verfahren zum Testen eines Blitzableitsystems (400) in einem Windenergieanlagen-Rotorblatt (200), ferner mit den Schritten:
Kontaktieren des Blitzableitsystems (400) im Bereich einer Rotorblattwurzel (210),
Positionieren einer Messleitung (330) mit einer elektrisch leitfähigen Spitze (340) in das Innere des Rotorblattes (200), bis die leitfähige Spitze (340) im elektrischen Kontakt steht mit einem Element des Blitzableitsystems (400), und
Einspeisen eines Signals über die Messleitung (330) und Messen des an dem Blitzableitsystem (400) im Bereich der Rotorblattwurzel (210) ankommenden Signals, um die Funktionsweise des Blitzableitsystems (400) im Bereich des Rotorblatts (200) zu überprüfen, und
Entfernen der Messleitung (330) nach Beendigung der Funktionsüberprüfung des Blitzableitsystems.

2. Verfahren nach Anspruch 1, wobei
das Windenergieanlagen-Rotorblatt (200) mindestens einen Blitzrezeptor (430) im Bereich einer Rotorblattspitze (220) und einem Blitzschutzkabel oder -leitung (410) in Inneren des Rotorblattes (200) aufweist, mit dem Schritt:
Herstellen eines elektrischen Kontaktes zwischen der leitfähigen Spitze (340) und dem mindestens einen Blitzrezeptor (430).

3. Verfahren nach Anspruch 1 oder 2, wobei
die leitfähige Spitze (340) als leitfähige Bürste ausgestaltet ist.

4. Verfahren nach Anspruch 1, 2 oder 3, wobei
die leitfähige Spitze (340) als Schornsteinfegerbesen oder als Schornsteinbesen ausgestaltet ist.

5. Verfahren nach einem der Ansprüche 1 bis 4, wobei
das Positionieren der Messleitung mit der Spitze durch eine fahrbare Positioniereinheit (350) innerhalb oder außen an dem Rotorblatt erfolgt.

6. Verfahren nach einem der Ansprüche 1 bis 5, wobei
die fahrbare Positioniereinheit (350) eine Halteeinheit (352) zum Halten der Positioniereinheit (350) in oder an dem Rotorblatt aufweist.

7. Messsystem zum Testen eines Blitzableitsystems in einem Windenergieanlagen-Rotorblatt, mit
einer Messeinheit (310) zum Erzeugen eines elektrischen Signals,
einer ersten Messleitung (330) mit einer leitfähigen Bürste (340), und
einer zweiten Messleitung (320) zum Kontaktieren eines Teils des Blitzableitsystems im Bereich der Rotorblattwurzel (230).

8. Messsystem nach Anspruch 7, ferner mit
einer Positioniereinheit (350) zum Positionieren der ersten Messleitung mit der Spitze innerhalb oder außen an dem Rotorblatt.

9. Messsystem nach Anspruch 8, wobei
die Positioniereinheit (350) eine Halteeinheit (352) aufweist.

10. Verwendung eines Schornsteinfegerbesens als erste Messleitung zur Kontaktierung eines Abschnitts eines Blitzableitsystems (400) innerhalb eines Windenergieanlagen-Rotorblatts,
wobei eine zweite Messleitung einen weiteren Abschnitt des Blitzableitsystems im Bereich der Rotorblattwurzel (210) kontaktiert,
wobei eine Messeinheit mit der ersten und zweiten Messleitung gekoppelt ist und dazu ausgestaltet ist, ein Signal zum Testen des Blitzableitsystems auszugeben.

## Claims

1. A method for testing a lightning protection system (400) in a wind turbine rotor blade (200), further comprising the steps:
contacting the lightning protection system (400) in the region of a rotor blade root (210),
positioning a measuring line (330) having an electrically conductive tip (340) in the interior of the rotor blade (200) until the conductive tip (340) is in contact with an element of the lightning protection system (400) and
feeding a signal via the measuring line (330) and measuring the signal arriving at the lightning protection system (400) in the region of the rotor blade root (210) in order to check the mode of operation of the lightning protection system (400) in the region of the rotor blade (200) and
removing the measuring line (330) after the end of the functional testing of the lightning protection system.

2. The method according to Claim 1, wherein
the wind turbine rotor blade (200) has at least one lightning receptor (430) in the region of a rotor blade tip (220) and a lightning protection cable or line (410) in the interior of the rotor blade (200) comprising the step:
making an electrical contact between the conductive tip (340) and the at least one lightning receptor (430).

3. The method according to Claim 1 or 2, wherein
the conductive tip (340) is configured as a conductive brush.

4. The method according to Claims 1, 2 or 3, wherein
the conductive tip (340) is configured as a chimney sweeps' brush or as a chimney brush.

5. The method according to Claims 1 to 4, wherein
the positioning of the measuring line with the tip is accomplished by a movable positioning unit (350) inside or outside on the rotor blade.

6. The method according to one of Claims 1 to 5, wherein
the movable positioning unit (350) comprises a holding unit (352) for holding the positioning unit (350) in or on the rotor blade.

7. A measuring system for testing a lightning protection system in a wind turbine rotor blade, comprising
a measuring unit (310) for producing an electrical system,
a first measuring line (330) with a conductive brush (340) and
a second measuring line (320) for contacting a part of a lightning protection system in the region of the rotor blade root (230).

8. The measuring system according to Claim 7, further comprising
a positioning unit (350) for positioning the first measuring line with the tip inside or outside on the rotor blade.

9. The measuring system according to Claim 8, wherein
the positioning unit (350) comprises a holding unit (352).

10. A use of a chimney sweeps' brush as a first measuring line for contacting a section of a lightning protection system (400) inside a wind turbine rotor blade,
wherein a second measuring line contacts a further section of the lightning protection system in the region of the rotor blade root (210),
wherein a measuring unit is coupled to the first and second measuring line and is configured to output a signal for testing the lightning protection system.

## Revendications

1. Procédé pour tester un système parafoudre (400) dans une pale de rotor d'éolienne (200), avec en outre les étapes :
de mise en contact du système parafoudre (400) dans la zone d'une racine de pale de rotor (210),
de positionnement d'une ligne de mesure (330) avec une pointe électriquement conductrice (340) à l'intérieur de la pale de rotor (200) jusqu'à ce que la pointe conductrice (340) se trouve en contact électrique avec un élément du système parafoudre (400), et
d'injection d'un signal par l'intermédiaire de la ligne de mesure (330) et de mesure du signal arrivant sur le système parafoudre (400) dans la zone de la racine de pale de rotor (210) pour vérifier le mode de fonctionnement du système parafoudre (400) dans la zone de la pale de rotor (200), et
de retrait de la ligne de mesure (330) à la fin de la vérification du fonctionnement du système parafoudre.

2. Procédé selon la revendication 1, dans lequel
la pale de rotor d'éolienne (200) présente au moins un récepteur de foudre (430) dans la zone d'une pointe de pale de rotor (220) et un câble ou une ligne de protection contre la foudre (410) à l'intérieur de la pale de rotor (200), avec l'étape
d'établissement d'un contact électrique entre la pointe (340) conductrice et l'au moins un récepteur de foudre (430).

3. Procédé selon la revendication 1 ou 2, dans lequel
la pointe conductrice (340) est configurée en tant qu'un balai conducteur.

4. Procédé selon la revendication 1, 2 ou 3, dans lequel
la pointe conductrice (340) est configurée en tant que balayette de ramonage ou en tant que brosse de ramonage.

5. Procédé selon l'une quelconque des revendications 1 à 4, dans lequel
le positionnement de la ligne de mesure avec la pointe est effectué par une unité de positionnement (350) mobile à l'intérieur ou à l'extérieur sur la pale de rotor.

6. Procédé selon l'une quelconque des revendications 1 à 5, dans lequel
l'unité de positionnement (350) mobile présente une unité de maintien (352) destinée à maintenir l'unité de positionnement (350) dans ou sur la pale de rotor.

7. Système de mesure pour tester un système parafoudre dans une pale de rotor d'éolienne, avec
une unité de mesure (310) pour générer un signal électrique,
une première ligne de mesure (330) avec un balai (340) conducteur, et
une deuxième ligne de mesure (320) pour mettre en contact une partie du système parafoudre dans la zone de la racine de pale de rotor (230).

8. Système de mesure selon la revendication 7, avec en outre
une unité de positionnement (350) pour positionner la première ligne de mesure avec la pointe à l'intérieur ou à l'extérieur sur la pale de rotor.

9. Système de mesure selon la revendication 8, dans lequel
l'unité de positionnement (350) présente une unité de maintien (352).

10. Utilisation d'une balayette de ramonage en tant que première ligne de mesure pour mettre en contact une section d'un système parafoudre (400) à l'intérieur d'une pale de rotor d'éolienne,
dans laquelle une deuxième ligne de mesure met en contact une autre section du système parafoudre dans la zone de la racine de pale de rotor (210),
dans laquelle une unité de mesure est couplée à la première et à la deuxième ligne de mesure et est configurée pour émettre un signal pour tester le système parafoudre.
